# EUROPEAN PATENT SPECIFICATION

(11) **EP 1 415 717 B1**
(45) Date of publication and mention of the grant of the patent: **14.12.2005**
(21) Application number: 03023494.2
(22) Date of filing: 18.10.2003
(51) Int. Cl.: B03B 4/02, B07B 13/00, B07B 13/04, B29B 17/00, B07B 13/11, B29C 45/17, B07B 1/28

(54) **Vibration separator**
Vibrationstrennvorrichtung
Dispositif de séparation de vibration

(30) Priority: 31.10.2002 IT VI20020239
(43) Date of publication of application: 06.05.2004
(73) Proprietor: Virginio Nastri S.R.L., 36071 Arzignano (Vicenza) (IT)
(72) Inventor: Virginio, Domenico, 36071 Arzignano (Vicenza) (IT); Virginio, Luca, 36072 Chiampo (Vicenza) (IT); Virginio, Marco, 36072 Chiampo (Vicenza) (IT); Virginio, Matteo, 36071 Arzignano (Vicenza) (IT)
(74) Representative: Bettello, Pietro

(56) References cited:
- US-A- 3 840 116
- US-A- 4 143 769
- US-A- 4 717 027
- US-A- 5 228 576
- PATENT ABSTRACTS OF JAPAN vol. 008, no. 238 (M-335), 31 October 1984 (1984-10-31) & JP 59 115820 A (MATETSUKUSU KK), 4 July 1984 (1984-07-04)

## Description

The present finding has the objective of creating a vibration separator for use, in particular, in the screening of plastic materials to separate, after the moulding operation, carried out through injection or blowing, finished pieces of different shapes and sizes from each other or finished pieces from the sprues.

As is known, the moulding operation of plastic materials produces, as well as finished pieces, also reject products, called sprues, which, emerging at the same time as the aforementioned pieces from the mould, need to be separated, in order to recover the raw material.

With the current state of the art the separation of moulded elements and sprues is carried out through a screening operation, carried out with different devices, in particular using sieves consisting of an inclined drum, cylindrical or prismatic in shape, worked by a rotational movement according to its axis and with the inner container made in perforated sheeting or through the use of a plurality of fixed or rotating cylinders.

The drawbacks of such types of separators are mainly due to the complexity of their realization, to the difficult maintenance and to the little possibility of being adjusted to be able to screen products with different sized pieces.

In the document US-A-4143769 is described a vibration separator comprising a vibrating structure, elastically supported and insulated through elastic springs on a frame; said vibrating structure comprises a screening grid made up of a plurality of tubular elements arranged parallel to each other.

The apparatus comprises an electric motor vibrator that imparts a rotational type vibration on it, i.e. a vibrating force aimed in every direction, rotating for 360°.

However in this device the tubular elements are completely rectilinear and this causes the drawback that the little elements to be screened often stop against the brackets provided at one end of said tubular elements.

The purpose of the present finding is the realisation of a separator that eliminates the drawbacks present in suchlike appliances. In particular, it must be of simple construction, must require minimum maintenance and must allow a rapid adaptability to the different sizes by means of a simple manual operation.

This is achieved by providing that the tubular elements comprise a first rectilinear portion, which constitutes the screening grid plane (11) and a second curved portion which facilitates the sliding and falling of the screened products on the unloading chute.

These and other characteristics of the finding shall become clearer with reference to a particular embodiment thereof, given as a non-limiting example, with the help of the attached tables of drawings, where:

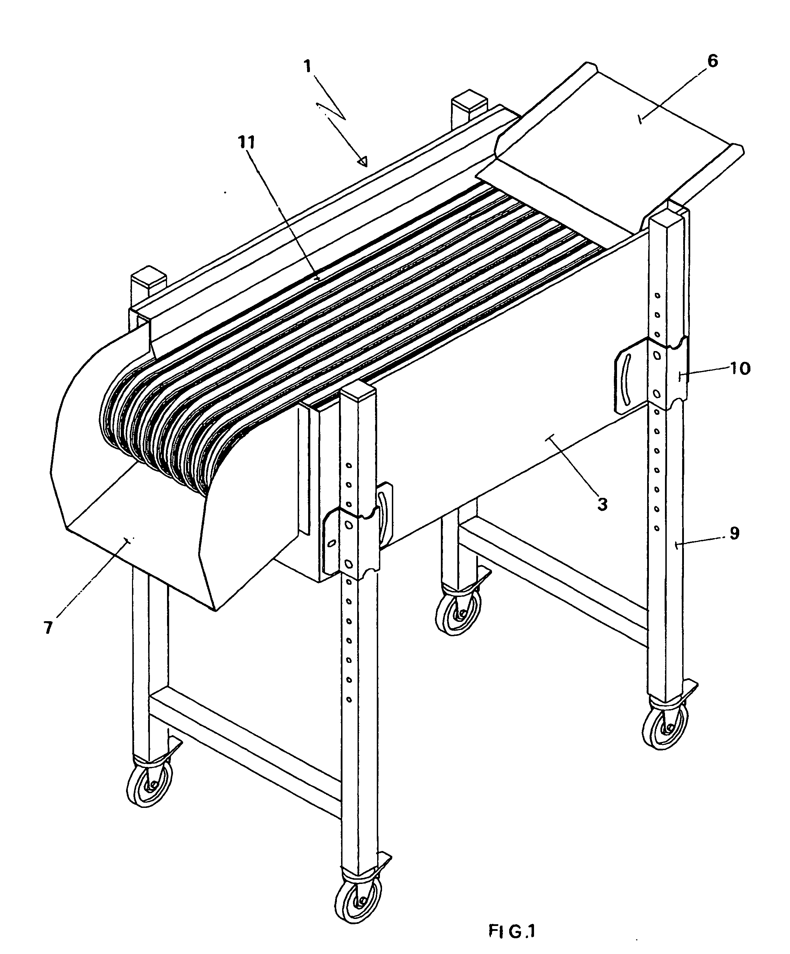

- fig. 1 (Tab. I) represents a perspective view of the vibration separator according to the finding;

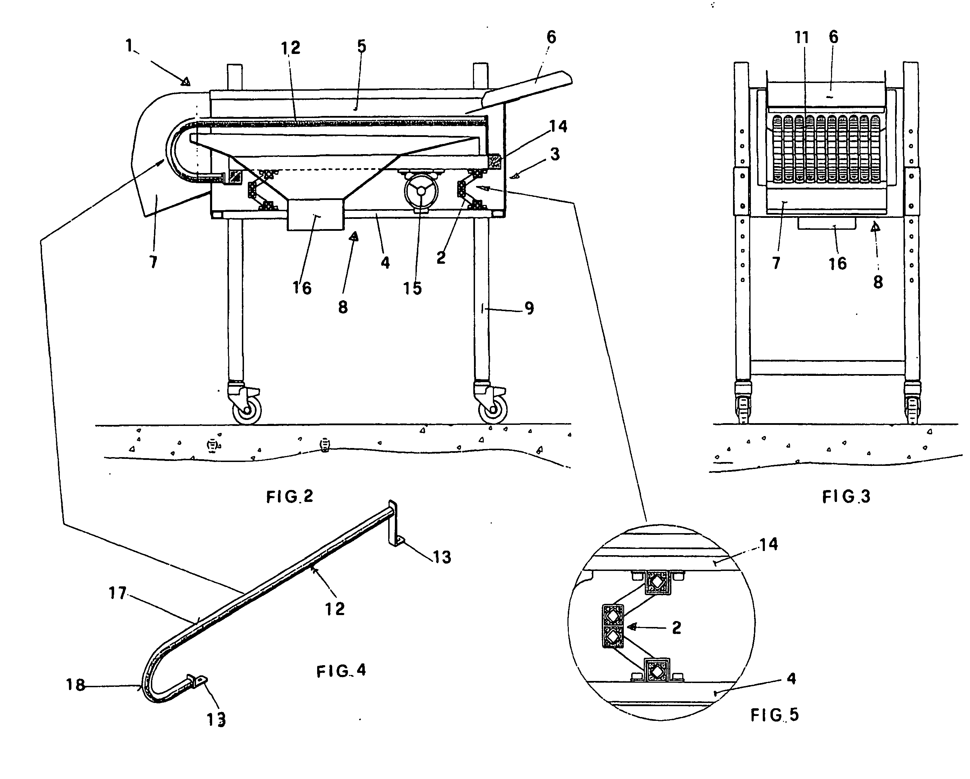

- figs. 2, 3 (Tab. II) represent two orthogonal views, with the frontal elevated view in section, of the separator according to the finding;
- the view 4 represents the detailed view of an element forming the vibrating plane;

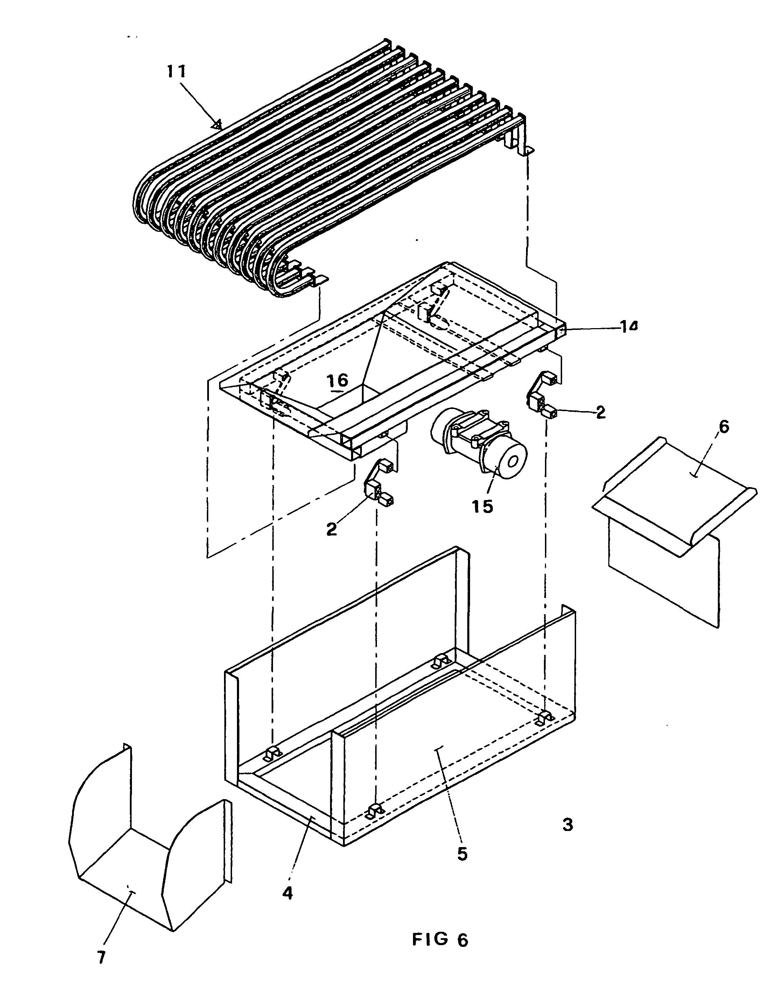

- fig. 5 represents the detailed view of the elastic support of the vibrating plane;
- fig. 6 (Tab. III) represents the exploded view of the components of the separator according to the finding.

As can be seen from the figures, the vibration separator according to the finding substantially consists of a vibrating structure, wholly indicated with reference numeral 1, elastically supported and insulated, through elastic springs 2, on a frame 3, made up of a base 4 provided with lateral sides 5, from the entrance chute 6 of the products to be sifted and from the unloading chute 7 of the screened products.

The entire group, vibrating structure/support frame, wholly indicated with 8, is supported by uprights 9, through articulated brackets 10, with which it is possible to adjust the inclination of the screening grid 11, from a horizontal position to a slightly inclined position.

The entire vibrating structure 1 comprises the screening grid 11, which is made up of a plurality of tubular elements 12, arranged parallel to each other and suitably separated from each other, supported, through the small brackets 13, by a single frame 14, on which the adjustable speed motor 15 and the lower unloading conveyor 16 of screened products are applied, which have pieces smaller in size than that defined by the grid itself.

The finding is characterised further by the particular embodiment of the tubular elements 12, which comprise a first rectilinear portion 17, which constitutes the screening grid plane 11 and a second curved portion 18, preferably with a circular curving profile, which facilitates the sliding and falling of the screened products on the unloading chute 7.

Obviously different embodiments from the one described are possible, according to the size and type of products to be screened without, for this reason, departing from the scope of the claims, outlined hereafter..

## Claims

1. VIBRATION SEPARATOR, of the type with a flat grid, which means able to cause a is provided with means able to cause a vibrating motion of the 360° rotational type, for use, in particular, in the screening of plastic products, to separate, after the moulding operation, carried out by means of injection or by blowing, the finished pieces of different shapes and/or sizes from each other, or else to separate the finished pieces from the sprues,
said separator comprising a vibrating structure (1), elastically supported and insulated, through elastic springs (2), on a frame (3), made up of a base (4), provided with lateral sides (5), the entrance chute (6) of the products to be screened and the unloading chute (7) of the screened products, the entire vibrating structure (1) comprising a screening grid (11), which is made up of a plurality of tubular elements (12), arranged parallel to each other and suitably spaced apart, supported, through the small brackets (13), by a single frame (14), on which both the adjustable speed motor (15) and the lower unloading conveyor (16) of the screened products are applied, which have pieces smaller in size than that defined by the grid itself, the separator being **characterised in that** the tubular elements (12) comprise a first rectilinear portion (17), which constitutes the screening grid plane (11) and a second curved portion (18), which facilitates the sliding and falling of the screened products on the unloading chute (7).

2. VIBRATION SEPARATOR, according to claim 1, **characterised in that** the entire group (8), vibrating structure/support frame, is supported by uprights (9), through articulated brackets (10), with which it is possible to adjust the inclination of the screening grid (11), from a horizontal position to a slightly inclined position.

3. VIBRATION SEPARATOR, according to claim 1, **characterised in that** the curved portion (18) of the tubular element (12) has a circular shaped profile.

## Patentansprüche

1. Vibrations-Trennvorrichtung des Typs mit einem flachen Gitter, die mit Mitteln zum Erzeugen einer Vibrationsbewegung mit einer Drehung um 360° versehen ist, insbesondere zur Verwendung beim Sieben von Kunststoffprodukten zur Trennung der fertigen Stücke verschiedener Formen und/oder Größen voneinander, im Anschluss an den Formvorgang mittels Blasen oder Einspritzen, oder auch zur Trennung der fertigen Stücke von den Gießtrichtern, wobei die Trennvorrichtung eine Vibrationsstruktur (1) umfasst, welche mittels elastischer Federn (2) auf einem auf der Grundplatte (4) aufgebauten Rahmen (3) elastisch abgestützt und isoliert ist, die mit Seitenflächen (5), der Einlaufrinne (6) für die zu siebenden Produkte und der Auslaufrinne (7) für die gesiebten Produkte versehen ist, wobei die gesamte Vibrationsstruktur (1) ein aus einer Vielzahl röhrenförmiger, parallel zueinander angeordneter und in geeigneter Weise voneinander beabstandeter Elemente (12) bestehendes Siebgitter (11) umfasst, welches von den kleinen Tragarmen (13) an einem einzelnen Rahmen (14) getragen wird, auf dem der einstellbare Geschwindigkeitsmotor (15) und der untere Entladungsförderer (16) der gesiebten Produkte angeordnet sind, welche Stücke geringerer Größe haben als die von dem Gitter selbst definierten, wobei die Trennvorrichtung **dadurch gekennzeichnet ist, dass** die röhrenförmigen Elemente (12) einen ersten geradlinigen Abschnitt (17) umfassen, welcher die Siebgitter-Ebene (11) bildet, und einen zweiten gebogenen Abschnitt (18), welcher das Gleiten und Fallen der gesiebten Produkte auf die Auslaufrinne (7) erleichtert.

2. Vibrations-Trennvorrichtung nach Anspruch 1, **dadurch gekennzeichnet, dass** die gesamte Gruppe (8) bestehend aus Vibrationsstruktur/Stützrahmen von Ständern (9) mittels Gelenkhaltern (10) getragen wird, mit denen es möglich ist, die Neigung des Siebgitters (11) von einer horizontalen in eine leicht geneigte Position einzustellen.

3. Vibrations-Trennvorrichtung nach Anspruch 1, **dadurch gekennzeichnet, dass** der gebogene Abschnitt (18) des röhrenförmigen Elements (12) ein kreisförmiges Profil aufweist.

## Revendications

1. Séparateur vibratoire du type muni d'une grille plate, qui est muni de moyens aptes à provoquer un mouvement vibratoire de type rotatif sur 360°, destiné à être utilisé, en particulier, dans le criblage de produits en matière plastique, pour séparer, après l'opération de moulage, effectuée par l'intermédiaire d'une injection ou par soufflage, les pièces finies de différentes formes et/ou dimensions les unes des autres, ou autrement pour séparer les pièces finies des carottes,
ledit séparateur comportant une structure vibrante (1), supportée et isolée de manière élastique, grâce à des ressorts élastiques (2), sur un bâti (3), constitué d'une base (4), munie de côtés latéraux (5), de la goulotte d'entrée (6) des produits devant être criblés et de la goulotte de déchargement (7) des produits criblés, la structure vibrante entière (1) comportant une grille de criblage (11) qui est constituée d'une pluralité d'éléments tubulaires (12), agencés parallèlement les uns aux autres et espacés de manière adaptée, supportés, à travers les petits étriers (13), par un bâti unique (14) sur lequel le moteur à vitesse ajustable (15) et le convoyeur de déchargement inférieur (16) des produits criblés sont appliqués, qui ont des pièces d'une dimension plus petite que celle définie par la grille elle-même, le séparateur étant **caractérisé en ce que** les éléments tubulaires (12) comportent une première partie rectiligne (17) qui constitue le plan de grille de criblage (11), et une seconde partie incurvée (18) qui facilite le glissement et la chute des produits criblés sur la goulotte de déchargement (7).

2. Séparateur vibratoire selon la revendication 1, **caractérisé en ce que** le groupe entier (8), structure vibrante/bâti de support, est supporté par des montants (9) à travers des étriers articulés (10), à l'aide desquels il est possible d'ajuster l'inclinaison de la grille de criblage (11), à partir d'une position horizontale jusqu'à une position légèrement inclinée.

3. Séparateur vibratoire selon la revendication 1, **caractérisé en ce que** la partie incurvée (18) de l'élément tubulaire (12) a un profil de forme circulaire.
